# EUROPEAN PATENT SPECIFICATION

(11) **EP 2 447 560 B1**
(45) Date of publication and mention of the grant of the patent: **11.06.2014**
(21) Application number: 11187259.4
(22) Date of filing: 31.10.2011
(51) Int. Cl.: F16D 21/06

(54) **Dual clutch transmission**
Doppelkupplungsgetriebe
Transmission à embrayage double

(30) Priority: 02.11.2010 JP 2010246881
(43) Date of publication of application: 02.05.2012
(73) Proprietor: Aisin Seiki Kabushiki Kaisha, Aichi-ken, 448-8650 (JP); Exedy Corporation, Neyagawa-shi, Osaka (JP)
(72) Inventor: Nagasaka, Hiroyuki, Kariya-shi, Aichi 448-8650 (JP); Mori, Kyosuke, Kariya-shi, Aichi 448-8650 (JP); Kumikawa, Yuki, Kariya-shi, Aichi 448-8650 (JP); Tanaka, Satoshi, Neyagawa-shi, Osaka (JP); Tomita, Yusuke, Neyagawa-shi, Osaka (JP)
(74) Representative: Kramer - Barske - Schmidtchen

(56) References cited:
- EP-A1- 1 275 867
- EP-A2- 1 632 687
- DE-A1-102006 045 163
- FR-A1- 2 292 893

## Description

### TECHNICAL FIELD

This disclosure generally relates to an automatic transmission including a dual dutch.

### BACKGROUND DISCUSSION

A dual clutch transmission (DCT), which is an automatic transmission including a dual clutch which shifts gears at high speed by selecting one of two coaxially provided input shafts to engage and disengage the input shafts and an engine effectively at an appropriate timing, is know.

For example, EP16326B7A2 (hereinafter referred to as Patent reference 1) discloses a dual clutch transmission in which an intermediate pressure plate of a clutch apparatus, which is rotatably connected to an output shaft of an engine via a damper, is supported by one of input shafts via a bearing. Clutch discs each connected to one of corresponding coaxially provided input shafts to be movable in an axial direction are disposed at both sides of the intermediate pressure plate. When one of the input shafts is selected, one of the clutch discs mounted to the selected input shaft is pressed by one of corresponding pressure plates movable in the axial direction to rotatably connect to the intermediate pressure plate, and thus transmitting a rotational force to one of the input shafts.

Notwithstanding, according to the disclosure in Patent reference 1, only the intermediate pressure plate is mounted to the input shaft to support an output of the engine. Thus, a supporting strength of the intermediate pressure plate is low and the intermediate pressure plate may be deformed when one of the clutch discs presses the intermediate pressure plate axially in a direction of the input shaft. Further, the construction disclosed in Patent reference 1 is susceptible to an engine oscillation/vibration, and the intermediate pressure plate may oscillate. Consequently, a connection between the intermediate pressure plate and one of the clutch discs which rotatably connects to the intermediate pressure plate is not stabilized to generate a dragging, or the like, and thus the clutch discs may be partially worn and/or a shifting feeling may be deteriorated.

EP 1 275 867 discloses a dual clutch transmission in which one wall of the clutch frame is supported by the clutch case.

A need thus exists for a dual clutch transmission which securely engages and disengages clutches with simple structures.

### SUMMARY

In light of the foregoing, the disclosure provides a dual clutch transmission, which includes a first input shaft rotatably supported by a case, the first input shaft including a hollow, a second input shaft penetrating through the first input shaft on a common axis with the first input shaft to be supported by the case, and a dual clutch selectively transmitting a rotational driving force of a prime mover to the first input shaft or the second input shaft. The dual clutch includes a clutch frame including a first wall and a second wall which are rotatably supported on the first input shaft and are connected to each other while keeping a distance from each other in an axial direction of the first input shaft, the clutch frame being restricted from moving towards the prime mover, a first clutch disc provided between the first wall and the second wall to be movable in the axial direction, a first pressure plate provided between the first clutch disc and the second wall to be movable in the axial direction, a first operational mechanism moving the first pressure plate towards the first wall, a second clutch disc positioned closer to the prime mover relative to the second wall to be movable in the axial direction, a second pressure prate provided between the second clutch disc and the prime mover to be movable in the axial direction, and a second operational mechanism moving the second pressure plate towards the second wall.

According to the disclosure, the clutch frame connected to the prime mover is rotatably supported by the first input shaft which has a larger diameter and high flexural rigidity. Further, because the clutch frame is formed by connecting the first wall and the second wall, the rigidity of the clutch frame per se is enhanced. According to the foregoing construction, even if the clutch frame and the first input shaft receive the oscillation of the prime mover, the oscillation (flexure) of the clutch frame and the first input shaft can be effectively restrained. Further, when the first clutch disc or the second clutch disc presses the first wall or the second wall, respectively, for establishing a rotatably connecting state, the pressing force applied to the first wall and the second wall can be effectively received by the clutch frame with high rigidity and by the first input shaft with high flexure rigidity, and thus there is no possibility that the first wall and/or the second wall are/is bent. Accordingly, there is no possibility of abrasion because of an unstable engagement between the first-wall and the first clutch disc or between the second wall and the second clutch disc, and the rotational force (torque) of the prime mover can be effectively transmitted to each of the input shafts.

According to another aspect of the disclosure, the clutch frame is connected to the prime mover via an oscillation absorbing mechanism.

According to the disclosure, because the clutch frame is connected to the prime mover via the oscillation absorbing mechanism, the oscillation (vibration) of the prime mover is restrained so as not be transmitted to the first wall or the second wall. Thus, the dual clutch can transmit the rotational force (torque) of the prime mover to each of the input shafts more effectively.

According to further aspect of the disclosure,the first wall and the second wall of the clutch frame are rotatably supported on the first input shaft while being restricted not to move relative to the first input shaft in the axial direction towards the prime mover.

According to the disclosure,the axial movement of the first wall and the second wall of the clutch frame supported by the first input shaft relative to the first input shaft towards the prime mover is restricted independently. Thus, the engagement between the first wall and the first clutch disc or between the second wall and the second clutch disc is not assumed to be unstable due to the undesired movement of the first wall or the second wall in the pressed direction even if the first clutch disc or the second clutch disc presses the first wall or the second wall. Accordingly, there is no possibility that the abrasion is generated at the engaging surfaces, and reliability is further enhanced.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view showing an overall construction of a dual clutch transmission according to an embodiment disclosed here; and

Fig. 2 is a schematic view of a dual clutch and a damper according to the embodiment disclosed here.

### DETAILED DESCRIPTION

One embodiment of a dual clutch transmission according to the disclosure will be explained with reference to illustrations of drawing figures as follows.

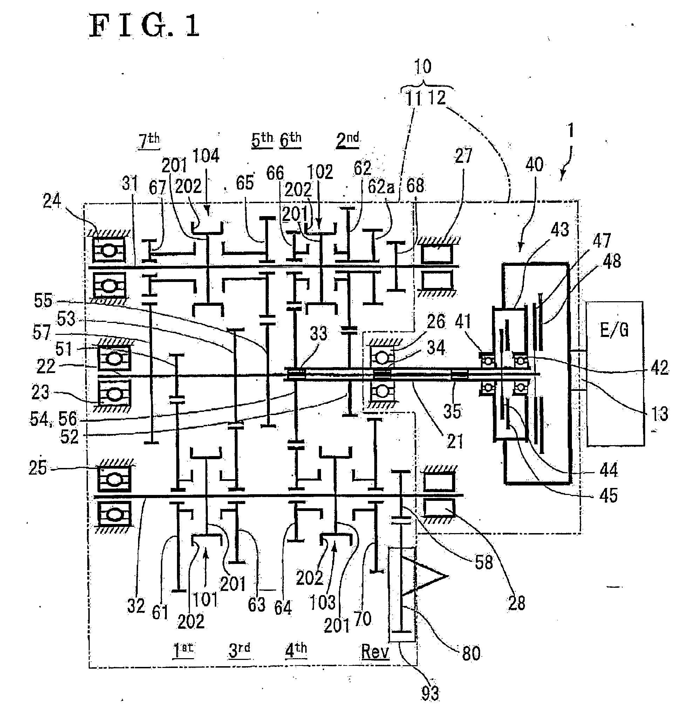

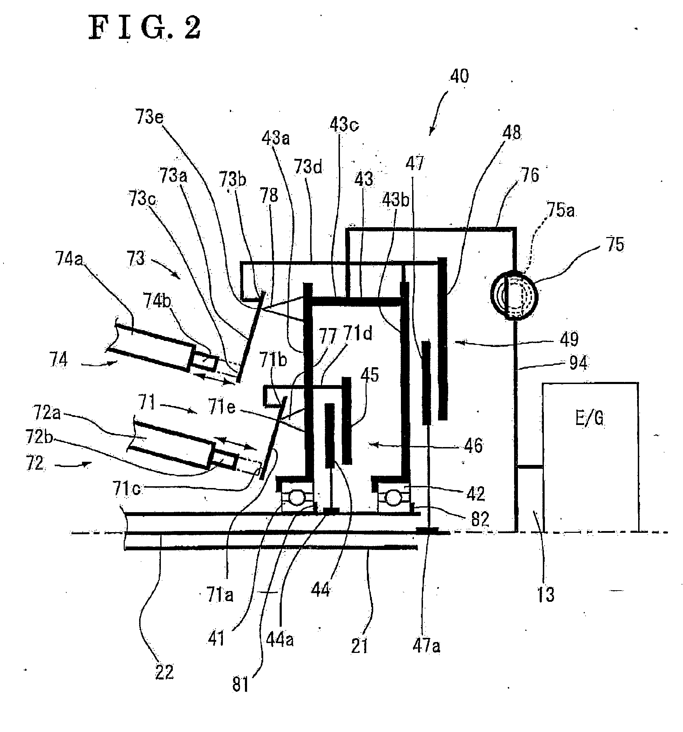

Referring to Figs. 1 and 2, a construction of a dual clutch transmission (DCT) 1 will be explained.

As shown in Fig. 1, the dual clutch transmission 1 includes a first input shaft 21, a second input shaft 22, a first output shaft 31, and a second output shaft 32 which are disposed within a case10. Further, a dual clutch 40, drive gears 51 to 57 for each of shift stages, a finial-speed reduction drive gears 58, 68, driven gears 61 to 67 for each of the shift stages, a reverse gear 70, and a ring gear 80 are provided in the case 10.

As shown in Fig. 1, the case 10 includes a transmission case 11 and a clutch housing 12. The transmission case 11 pivotally supports shafts via bearings 23 to 25, respectively. The clutch housing 12 is positioned to face an end surface of the transmission case 11 and is fixed to the transmission case 11 by bolts. The clutch housing 12 pivotally supports the shafts via bearings 26 to 28, respectively, and houses the dual clutch 40 therein.

The first input shaft 21, which is a hollow shaft, is rotatably supported on a portion of an external peripheral surface (external periphery) of the second input shaft 22 via needle bearings (i.e.,serving as a bearing) 33 to 35, and is rotatably supported by a ball bearing 26 (i.e., serving as a bearing) relative to the clutch housing 12. Portions for supporting the bearings and plural external gears are formed on the external periphery of the first input shaft 21. A second speed drive gear 52, a fourth speed drive gear 54 with larger diameter, and a sixth speed drive gear 56 are provided on the first input shaft 21.Further, a connection portion connected to the first clutch disc 44 of the dual clutch 40 is formed on the first input shaft 21 in a form of a spline.

The second input shaft 22, which is a solid shaft, is rotatably supported by a ball bearing (i.e.,serving as the bearing) 23 relative to the transmission case 11. That is, the second input shaft 22 is arranged coaxially with the first input shalt 21to be penetrated through the first input shaft 21and to be relatively rotatable. Portions to support the bearings and plural external splines are formed on an external peripheral surface of the second input shaft 22. A first speed drive gear 51 and a third speed drive gear 53 having a larger diameter are directly formed on the second input shaft 22. A fifth speed drive gear 55 and a seventh speed drive gear 57 are fitted onto the external spline formed on the external peripheral surface of the second input shaft 22 by means of a spline engagement. Further, an end portion of the second input shaft 22 is formed with a connection portion connected to a second clutch disc 47 of the dual clutch 40 in a form of spline. A hollow shaft may, alternatively, be applied as the second input shaft 22.

The first output shaft 31 is supported by the bearings 24, 27 to be rotatable relative to the transmission case 11 and the clutch housing 12, and is arranged in parallel to the second input shaft 22 in the transmission case 11. The final speed reduction drive gear 68, portions supporting the bearings and plural external splines are formed on an external peripheral surface of the first output shaft 31. Hubs 201 each provided for shift clutches 102, 104, respectively, are fitted to the external spline of the first output shaft 31 by means of spline fitting. The final speed reduction drive gear 68 is meshed with the ring gear 80 of a differential mechanism. Further, the first output shaft 31 is formed with a support portion which idly supports a second speed driven gear 62, a fifth speed driven gear 65, a sixth speed driven gear 66, and a seventh speed driven gear 67.

The second output shaft 32 is supported by the bearings 25, 28 to be rotatable relative to the transmission case 11 and the clutch housing 12, and is arranged in parallel with the second Input shaft 22 in the transmission case 11. The final speed reduction drive gear 58 is formed on an external peripheral surface of the second output shaft 32. Further, portions to support bearings and plural external splines are formed on the external peripheral surface of the second output shaft 32. The hub 201 for each shift clutch 101, 103 is press-fitted to the external spline of the second output shaft 32 by a spline engagement. The final speed reduction drive gear 58 is meshed with the ring gear 80 of the differential mechanism. Further, the second output shaft 32 is formed with support portions which Idly support a first speed driven gear 61,a third speed driven gear 63, a fourth speed driven gear 64, and the reverse gear 70.

The reverse gear 70 is idly provided at the support portion of the reverse gear 70 formed on the second output shaft 32. According to the embodiment, the reverse gear 70 is always engaged with a small diameter gear 62a which is integrally formed with the second speed driven gear 62.

Each of the shift clutches 101, 102,103,104 includes the hub 201 and a sleeve202. The hub 201 is formed in a disc shape having a hollow, which is formed with an internal spline and an external spline, and is fitted onto the external spline of the first output shaft 31, or the second output shaft 32 by means of the spline engagement. The sleeve 202 is geared with the external spline of the hub 201 to be axially slidable relative to the hub 201. When the sleeve 202 axially slides relative to the hub 201, the sleeve 202 is configured to engage with a synchromesh gear portion of the reverse gear 70 or one of the driven gears 61 to 67. Namely, by the sliding movement in the axial direction, the sleeve 202 switches an engaged state and a disengaged state with the synchromesh gear provided at the driven gears 61 to 67 and the reverse gear 70,to selectively connect one of the first speed driven gear 61, the third speed driven gear 63, the fourth speed driven gear 64, and the reverse gear 70 to the second output shaft 32, or one of the second speed driven gear 62, the fifth speed driven gear 65, the sixth speed driven gear 66, and the seventh speed driven gear 67 to the first output shaft 31.

As shown in Fig. 1, the ring gear 80 is engaged with the final speed reduction drive gear 58 and the final speed reduction drive gear 68 so as to be always rotatably connected to the first output shaft 31 and the second output shaft 32. The ring gear 80 is connected to driving wheels via a rotational shaft pivotally supported by the case 10 and the differential mechanism. That is, the ring gear 80 of the differential mechanism serves as a final gear for the transmission.

Constructions of the dual clutch 40 will be explained in detail referring to Figs. 1 and 2 as follows. The dual clutch 40, which is a dry type clutch, includes a clutch frame 43, a first clutch disc 44, a first pressure plate 45, a first operational mechanism 46, a second clutch disc 47, a second pressure plate 48, and a second operational mechanism 49. The first clutch disc 44 transmits a torque (rotational driving force) of an internal combustion engine (i.e.,serving as a prime mover) E/G to the first input shaft 21.The second clutch disc 47 transmits a driving force of the internal combustion engine E/G to the second input shaft 22.

The dual clutch 40 is housed in the clutch housing 12 at a right side in Fig. 1, and a rotational shaft of the dual clutch 40 is provided coaxially to the first input shaft 21 and the second-input shaft 22. The first clutch disc 44 is spline fitted onto a connecting shaft portion of the first input shaft 21 to be axially movable while being restricted with a rotational movement. The second clutch disc 47 is spline fitted onto a connecting shaft portion of the second input shaft 22 to be axially movable while being restricted with a rotational movement. According to the dual clutch 40, a high speed shift change is performed by switching the connections with the internal combustion engine E/G by consecutively operating the first and second clutch discs 44, 47 relative to the first and second input shafts 21, 22 based on control commands from a vehicle by a method which will be explained hereinafter.

The clutch frame 43 is rotatably mounted on the first input shaft 21, and is rotatably connected to the internal combustion engine E/G while a rotational direction is limited, Thus, the clutch frame 43 integrally rotates with the internal combustion engine E/G. The clutch frame 43 includes a first wall 43a and a second wall 43b which are connected to each other as shown in Fig. 2. The first wall 43a and the second wall 43b are each formed in a disc shape. The second wall 43b is positioned at a side closer to the internal combustion engine E/G keeping a predetermined distance from the first wall 43a in an axial direction on the first input shaft 21. Internal periphery portions of the first wall 43a and the second wall 43b are rotatably supported by bearings (e.g.,ball bearings) 41, 42, respectively.

End surfaces of the bearings 41, 42 facing the internal combustion engine E/G are stopped by stopper plates (i.e.,each serving as a restriction member) 81,82, respectively, so that a movement of each of the bearings 41, 42 relative to the first input shaft 21 towards the internal combustion engine E/Gin one axial direction of the first input shaft 21 is securely restricted. For example, a C-ring fitted into a groove formed on an external peripheral surface of the first input shaft 21 serves as the stopper plate 81, 82. According to the embodiment, the stopper plates 81, 82 are provided at the bearings 41, 42, respectively, however, the construction is not limited thereto. For example, only the stopper plate 82 may be provided, and adequate effects can be attained. Alternatively, only the stopper plate 81 may be provided.

Outer periphery portions of the first wall 43a and the second wall 43b are connected by a connecting portion 43c, thus, by integrally forming the first wall 43a and the second wall 43b into a box shaped structure, the clutch frame 43 with high rigidity is attained.

The first clutch disc 44 is a frictional plate formed in a disc shape. The first clutch disc 44 is pressed onto a plane surface of the first wall 43a of the clutch frame 43 facing the internal combustion engine E/G to engage with-the first wall 43a by a frictional force so as to integrally rotate with the first wall 43a. The first clutch disc 44 is positioned between the first wall 43a and the second wall 43b. A spline is formed on an internal peripheral portion 44a of the first clutch disc 44. The spline of the first clutch disc 44 is engaged with a spline formed on the external peripheral surface of the first input shaft 21, thereby restricting the rotation of the first clutch disc 44 and allowing the movement of the first clutch disc 44 in the axial direction. Accordingly, by the engagement of the first clutch disc 44 with the first wall 43a (the clutch frame 43) to integrally rotate, a rotational force of the internal combustion engine E/G is transmitted to the first clutch disc 44 via the clutch frame 43 and is transmitted to the first input shaft 21from the first clutch disc 44.

The first pressure plate 45 is configured to press the first clutch disc 44 towards the first wall 43a in order to engage the first clutch disc 44 with the first wall 43a. Thus, the first pressure plate 45 is positioned between the first clutch disc 44 and the second wall 43b to be movable in the axial direction. The first pressure plate 45 is formed in a disc plate shape, presses the first clutch disc 44 towards the first wall 43a by means of the first operational mechanism 46, and sandwiches the first clutch disc 44 together with the first wall 43a. The first pressure plate 45 is supported by the first operational mechanism 46.

The first operational mechanism 46 is configured to press the first clutch disc 44 towards the first wall 43a via the first pressure plate 45 to move the first clutch disc 44 forward or backward. The first operational mechanism 46 includes a link portion 71 and a cylinder portion 72, The link portion 71 includes a lever mechanism having a lever 71a, a connection lever 71d, and a projection portion 77.

The projection portion 77 supporting a fulcrum 71e of the lever 71 a is formed on a wall surface of the first wall 43a facing the transmission. An application point portion 71b of force of the lever 71a serving as a point of application of the lever mechanism is connected to the first pressure plate 45 by the connection lever 71d. A tip end of a cylinder piston 72b of a cylinder 72a of the cylinder portion 72 is attachable to and detachable from a point of effort portion 71c of the lever 71a (i.e., serving as a point of effort of the lever).The connection lever71d is supported by the first wall 43a by means of a plate shaped spring member which restricts a rotational movement and allows a linear movement of the connection lever 71d in an axial direction. Thus, the link portion 71 including the connection lever 71d and the first pressure plate 45 connected to the connection lever 71d are integrally rotated with the first wall 43a.

The cylinder portion 72 includes an electric motor supported by the clutch housing 12 and the cylinder 72a. The electric motor converts a rotational movement to a linear movement to move the tip end of the cylinder piston 72b of the cylinder 72a in a forward or backward direction. Then, by pressing the point of effort portion 71 c of the lever 71a by the tip end of the cylinder piston 72b towards the internal combustion E/G, the first pressure plate 45 is moved towards the first wall 43a to press the first clutch disc 44 in the axial direction so that the first clutch disc 44 and the first wall 43a are engaged.

The second clutch disc 47 is a frictional plate formed in a disc shape. The second clutch disc 47 is pressed onto a plane surface of the second wall 43b of the clutch frame 43 facing the internal combustion engine E/G to engage with the second wall 43b by a frictional force so as to integrally rotate with the second wall 43b. The second clutch disc 47 is positioned closer to the internal combustion engine E/G relative to the second wall 43b. A spline is formed on an internal peripheral portion 47a of the second clutch disc 47. The spline of the second clutch disc 47 is engaged with a spline formed on the external peripheral surface of the second input shaft 22, thereby restricting the rotation of the second clutch disc 47 and allowing the movement of the second clutch disc 47 in the axial direction. Accordingly, by the engagement of the second clutch disc 47 with the second wall 43b (the clutch frame 43) to integrally rotate, a rotational force of the internal combustion engine E/G is transmitted to the second clutch disc 47 via the clutch frame 43 and is transmitted to the second input shaft 22 from the second clutch disc 47.

The second pressure plate 48 is configured to press the second clutch disc 47 towards the second wall 43b in order to engage the second clutch disc 47 with the second wall 43b. Thus, the second pressure plate 48 is positioned closer to the internal combustion engine E/G relative to the second clutch disc 47 to be movable in the axial direction. The second pressure plate 48 is formed in a disc plate shape, presses the second clutch disc 47 towards the second wall 43b by means of the second operational mechanism 49, and sandwiches the second clutch disc 47 together with the second wall 43b. The second pressure plate 46 is supported by the second operational mechanism 49.

The second operational mechanism 49 is configured to press the second clutch disc 47 towards the second wall 43b via the second pressure plate 48 to move the second clutch disc 47 forward or backward. The second operational mechanism 49 includes a link portion 73 and a cylinder portion74.The link portion 73 includes a lever mechanism having a lever 73a, connection lever 73d, and a projection portion 78.

The projection portion 78 supporting a fulcrum 73e of the lever 73a is formed on a wall surface of the first wall 43a facing the transmission. An application point portion 73b of force of the lever 73a serving as a point of application of the lever mechanism is connected to the second pressure plate 48 by the connection lever73d. A tip end of a cylinder piston 74b of a cylinder 74a of the cylinder portion 74 is attachable to and detachable from a point of effort portion 73c of the lever 73a (i.e., serving as a point of effort of the lever). The connection lever 73d is supported by the second wall 43b by means of a plate shaped spring member which restricts a rotational movement and allows a linear movement of the connection lever 73d in an axial direction. Thus, the link portion 73 including the connection lever 73d and the second pressure plate 48 connected to the connection lever 73d are integrally rotated with the second wall 43b.

The cylinder portion 74 includes an electric motor supported by the clutch housing 12 and the cylinder 74a. The electric motor converts a rotational movement to a linear movement to move the tip end of the cylinder piston 74b of the cylinder 74a in a forward or backward direction. Then, by pressing the point of effort portion 73c of the lever 73a by the tip end of the cylinder piston 74b towards the internal combustion E/G, the second pressure plate 48 is moved towards the second wall 43b to press the second clutch disc 47 in the axial direction so that the second clutch disc 47 and the second wall 43b are engaged.

The clutch frame 43 is connected to an output shaft 13 of the internal combustion engine E/G via a flywheel 94, a damper 75 serving as an oscillation absorbing mechanism, and a connecting arm 76. As shown in Fig. 2, the damper 75 is arranged between the connecting arm 76 and the flywheel 94 in order to absorb oscillations generated in an axial direction and an orthogonal direction relative to the output shaft of the internal combustion engine E/G. A coil spring 75a is compressingly in contact with the damper 75 so that a neutral position at the clutch frame 43 side is maintained by a reaction force of the coil spring 75a. When a vibration (oscillation) in a rotational direction is transmitted from the internal combustion engine E/G, the coil spring 75a is compressed to absorb the vibration, and the coil spring 75a returns to an original state when the vibration converges to restore the clutch frame 43 side to be in the neutral state. Further, when the vibration in a rotational axis direction is generated, the vibration is absorbed by a play for assembling the damper 75. Thus, the vibration is absorbed by the damper 75 even if the vibration is generated at the internal combustion engine E/G in the axial direction and in the orthogonal direction, the clutch frame 43 is unlikely influenced by the vibration and the vibration (oscillation) is not generated at the first wall 43a and the second wall 43b of the clutch frame 43. Accordingly, the first wall 43a and the second wall 43b, and the first clutch disc 44 and the second clutch disc 47 are favorably engaged without oscillation,

An operation of the dual clutch type transmission according to the embodiment will be explained hereinafter. When the dual clutch transmission 1 starts operating, a controlling device operates the first and second clutch discs 44, 47 of the dual clutch 40 and the shift clutches 101 to 104 in accordance with vehicle operational states, for example, a throttle opening degree, an engine rotation speed, and a vehicle speed. In a state where the dual clutch transmission 1 is not operated, the first and second clutch discs 44, 47 of the dual clutch 40 are disengaged and the shift clutches 101 to 104 are positioned at each of the neutral positions.

First, when the internal combustion engine E/G is started in a state where a vehicle stops and a shift lever of the dual clutch transmission 1 is shifted to a forward position for moving a vehicle forward, the control device slides the sleeve 202 of the shift clutch 101 to engage the sleeve 202 with the synchromesh gear portion of the driven gear 61 of the speed gears, and controls other clutches to be at the neutral portions to establish a gear arrangement for a first speed gear stage. When a rotation speed of the internal combustion engine E/G exceeds a predetermined speed upon an increase in the throttle opening degree, the control device operates the second clutch disc 47 of the dual clutch 40 in accordance with the level of throttle opening degree to gradually increase an engaging force so that the second clutch disc 47 is rotatably connected to the second input shaft 22 and the second output shaft 32 including the first speed gear set 51, 61.

In those circumstances, the control device operates the electric motor of the second operational mechanism 49 to operate the second clutch disc 47, thus to move the cylinder piston 74b of the cylinder portion 74 in a forward direction, that is, towards the internal combustion engine E/G. Thereafter, the control device controls to contact the tip end of the cylinder piston 74b to the point of effort portion 73c of the lever 73a of the link portion 73 and further moves the cylinder piston 74b forward. The lever 73a whose point of effort (i.e., the point of effort portion 73c) is pressed towards the internal combustion engine E/G rotates about a fulcrum (i.e., the projection portion 78) provided at the first wall 43a so that the point of application portion 73b moves to be away from the first wall 43a. Because the point of application portion 73b is connected to the second pressure plate 4B by means of the connection lever 73d, the movement of the point of application portion being away from the first wall 43a allows the second pressure plate 48 to move towards the second wall 43b, and the second pressure plate 48 pushes the second clutch disc 47 towards the second wall 43b. By further moving the cylinder piston 74b in the forward direction, the second clutch disc 47 is pressed to the second wall 43b and is positioned between the second pressure plate 48 and the second wall 43b to integrally rotate. Then, the rotational force of the internal combustion engine E/G is transmitted to the second input shaft 22 to which the second clutch disc 47 is rotatably connected.

In those circumstance, the second wall 43b, which is pressed by the second clutch disc 47, is integrally connected to the first wall 43a to form the clutch frame 43 to have high rigidity, and is mounted to the first input shaft 21, which has a larger diameter and a higher rigidity than the second input shaft 22, via the bearings 42, 41 together with the first wall 43a. Accordingly, because the clutch frame 43 and the first input shaft 21 stably support the second wall 43b without bending even if the second wall 43b is pushed by the second clutch disc 47, there is no possibility of abrasion due to an undesired partial contact of the second clutch disc 47 to the second wall 43b because of an unstable engagement between the second clutch disc 47 and the second wall 43b.

Accordingly, the driving force of the internal combustion engine E/G is transmitted from the second wall 43b (clutch frame 43) to the ring gear 80 of the differential mechanism via the second clutch disc 47, the second input shaft 22, the first speed gear set 51, 61, the shift clutch 101, the second output shaft 32, and the final speed reduction driving gear 58, in the mentioned order, and thus the vehicle travels in the first speed.

Next, when the vehicle operational state is assumed to be a state which is appropriate for a second-speed traveling, for example, by an increase of the throttle opening degree, the control device slides the sleeve 202 of the shift clutch 102 to engage the sleeve 202 with the synchromesh gear portion of the driven gear 62 of the speed gears to establish a gear arrangement for a second speed gear stage. Then, the dual clutch 40 is switched to the first clutch disc 44 to switch to a second speed traveling, and the sleeve 202 of the shift clutch 101 is disengaged thereafter.

In those circumstances, the control device activates the electric motor of the first operational mechanism 46 in order to switch the dual clutch 40 to connect the first clutch disc 44, and controls the cylinder piston 72b of the cylinder portion 72 to move forward towards the internal combustion engine E/G. Then, the control device controls the cylinder piston 72b so that the tip end thereof contacts the point of effort portion 71c of the lever 71a of the link portion 71 and the cylinder piston 72b further moves forward. The lever 71a whose point of effort (i.e., the point of effort portion 71c) is pressed towards the internal combustion engine E/G rotates about a fulcrum-(i.e., the projection portion 77) provided at the first wall 43a so that the point of application portion 71 b moves to be away from the first wall 43a. Because the point of application portion 71 b is connected to the first pressure plate 45 by means of the connection lever 71d, the movement of the point of application portion 71 b being away from the first wall 43a allows the first pressure plate 45 to move towards the first wall 43a, and the first pressure plate 45 pushes the first clutch disc 44 towards the first wall 43a. By further moving the cylinder piston 72b in the forward direction, the first clutch disc 44 is pressed to the first wall 43a and is positioned between the first pressure plate 45 and the first wall 43a to integrally rotate. Then, the rotational force of the internal combustion engine E/G is transmitted to the first input shaft 21 to which the first clutch disc 44 is rotatably connected.

In those circumstances, similar to the operation of the second clutch disc 47, because the clutch frame 43 and the first input shaft 21 stably support the first wall 43a without bending even if the first wall 43a is pushed by the first clutch disc 44, there is no possibility of abrasion due to an undesired partial contact of the first clutch disc 44 to the first wall 43a because of an unstable engagement between the first clutch disc 44 and the first wall 43a.

Accordingly, the driving force of the internal combustion engine E/G is transmitted from the first wall 43a (clutch frame 43) to the ring gear 80 of the differential mechanism via the first clutch disc 44, the first input shaft 21, the second speed gear set 52, 62, the shift clutch 102, the first output shaft 31, and the final speed reduction driving gear 68, in the mentioned order, and thus the vehicle travels in the second speed.

Similar to the foregoing operations, in the third speed to the seventh speed, the control device controls to consecutively select speed gears appropriate for the operational state of the vehicle, and selects the first clutch disc 44 and the second clutch disc 47 alternately, so that the vehicle travels with the selection of a speed gear which is appropriate for the traveling state,

When the shift lever of the dual clutch transmission 1 is shifted to a reverse position in a state where the vehicle stops while the engine E/G is running, the control device detects that the shift lever is at the reverse position and slides the sleeve 202 of the shift dutch 103 to engage the sleeve 202 with the synchromesh gear portion of the reverse gear 70, and controls other clutches to be at the neutral portions to establish a gear arrangement for a reverse gear stage. In those circumstances, the reverse gear 70 is always engaged with the small diameter gear 62a which is integrally formed with the driven gear 62 of the speed gears. Then, as explained above, when the reverse gear 70 is selected, the first clutch disc 44 is selected to connect to the first input shaft 21. Accordingly, the driving force of the internal combustion engine E/G is transmitted from the first wall 43a (clutch frame 43) to the ring gear 80 of the differential mechanism via the first clutch disc 44, the first input shaft 21, the second speed gear set 62, 62, 62a, the reverse gear 70, the shift clutch 103, the second output shaft 32, and the final speed reduction driving gear 58, in the mentioned order, and thus the vehicle starts moving in a reverse direction.

As explained above, according to the embodiment, the clutch frame 43 rotatably connected to the internal combustion engine E/G serving as the prime mover is supported by the first input shaft 21 which has a large diameter and has a high flexural rigidity. Further, because the clutch frame 43 is formed by connecting the first wall 43a and the second wall 43b, a strength/rigidity of the clutch frame 43 per se is enhanced. Accordingly, even if the clutch frame 43 and the first input shaft 21 receive the oscillation of the internal combustion engine E/G, the oscillation (flexure) of the clutch frame 43 and the first input shaft 21 is effectively restrained. Further, because the first wall 43a or the second wall 43b effectively receives the pressing force as the clutch frame 43 having high rigidity and by the first input shaft 21 having high flexural rigidity when the first clutch disc 44 or the second clutch disc 47 is rotatably connected while pressing the first wall 43a or the second wall 43b, there is no possibility that the first wall 43a or the second wall 43b is bent. Accordingly, there is no possibility of abrasion at the engaging surfaces of the clutch disc and the wall because of an unstable engagement between the first wall 43a and the first clutch disc 44 or between the second clutch disc 47 and the second wall 43b, and thus the rotational force of the internal combustion engine E/G can be effectively transmitted to the input shafts 21, 22.

Further, according to the construction of the embodiment, because the clutch frame 43 is rotatably connected to the internal combustion engine E/G via the damper 75 serving as the oscillation absorbing mechanism, the oscillation (vibration) of the internal combustion engine E/G is restrained and is not transmitted to the first wall 43a and/or the second wall 43b. Accordingly, the dual clutch 40 transmits the rotational force (torque) of the internal combustion E/G to each of the input shafts 21, 22 further effectively.

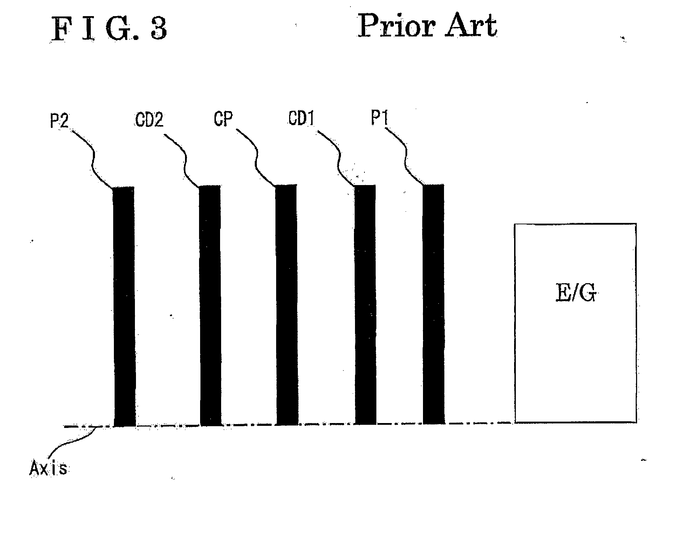

According to a known construction, for example, shown in Fig. 3, a first pressure plate P1 is arranged on an axis close to an engine E/G. A first clutch disc CD1 is arranged coaxially to the first pressure plate P1. A center plate CP is arranged adjacent to the first clutch disc CD1 in an axial direction. A second clutch disc CD2 is arranged coaxially to the first clutch disc CD1 so that the center plate CP is sandwiched by the second clutch disc CD2 and the first clutch disc CD1. A second pressure plate P2 is arranged adjacent to the second clutch disc CD2 in the axial direction. When a torque is transmitted, the first clutch disc CD1 and the second clutch disc CD2 are pressed to contact the first pressure plate P1 and the second pressure plate P2, respectively, and to contact the center plate CP. In those circumstance, the both side surfaces of the first clutch disc CD1 and the both side surfaces of the second clutch disc CD2 are heated by a frictional contact with the first pressure plate P1 and the second pressure plate P2, respectively, and with the center plate CP, thus, a torque is not stabilized. On the other hand, according to the construction of the embodiment, as shown in Fig. 2, a portion of the flrst clutch disc 44 pressed by the first pressure plate 45 corresponds to one side surface of the first clutch disc 44, and a portion of the second clutch disc 47 pressed by the second pressure plate 48 corresponds to one side surface of the second clutch disc 47. Further the first pressure plate 45 and the second wall 43b are positioned keeping a predetermined length of distance therebetween. Thus, the first clutch disc 44 and the second clutch disc 47 are not affected by the heat generated due to being pressed on the both side surfaces thereof. Accordingly, a frictional coefficient of the first clutch disc 45 and the second clutch disc 47 can be estimated with high precision, and the torque is stabilized.

According to the embodiment, a frictional plate with a single plate is applied as the first clutch disc 44 and the second clutch disc 47. However, the construction of the first clutch disc 44 and the second clutch disc 47 is not limited, and any types of multiple plate clutches with multiple frictional plates are applicable. Namely, for example, multiple clutch discs and multiple movable bodies are arranged alternately so that each of the movable bodies is positioned between the adjacent clutch discs to be pressed by a pressure plate. The same effects and advantage from the embodiment can be attained with this structure.

According to the embodiment, the internal combustion engine E/G is applied as the prime mover, the construction of the prime mover is not limited. For example, an electric motor may be applied.

According to the embodiment, the cylinder portions 72, 74 for operating the first clutch disc 44 and the second clutch disc 47 are driven by the electric motor, however, the construction for actuating the cylinder portions 72, 74 is not limited. For example, a cylinder utilizing an air pressure or a direct drive electric motor may be applied.

Further, according to the embodiment, the dual clutch transmission is applied to an automobile, however, the dual clutch transmission of the disclosure is applicable to other vehicles, for example, ships, boats, trains, and aircrafts.

## Claims

1. A dual clutch transmission, comprising:
a first input shaft (21) rotatably supported by a case (10), the first input shaft (21) including a hollow;
a second input shaft (22) penetrating through the first input shaft (21) on a common axis with the first input shaft (21) to be supported by the case;
a dual clutch (40) selectively transmitting a rotational driving force of a prime mover (E/G) to the first input shaft (21) or the second input shaft (22), the dual clutch (40) including:
a clutch frame (43) including a first wall (43a) and a second wall (43b) which are rotatably supported on the first input shaft (21) and are connected to each other while keeping a distance from each other in an axial direction of the first input shaft (21), the) clutch frame (43) being restricted from moving towards the prime mover ;
a first clutch disc (44) provided between the first wall (43a) and the second wall (43b) to be movable in the axial direction;
a first pressure plate (45) provided between the first clutch disc (44) and the second wall (43b) to be movable in the axial direction,
a first operational mechanism (46) moving the first pressure plate (45) towards the first wall (43a);
a second clutch disc (47) positioned closer to the prime mover relative to the second wall (43b) - to be movable in the axial direction;
a second pressure plate (48) provided between the second clutch disc (47) and the prime mover to be movable in the axial direction; and
a second operational mechanism (49) moving the second pressure plate (48) towards the second wall (43b).

2. The dual clutch transmission according to claim 1, wherein the clutch frame (43) is connected to the prime mover (E/G) via an oscillation absorbing mechanism (75).

3. The dual clutch transmission according to either claim 1 or 2, wherein the first wall (43a) and the second wall (43b) of the clutch frame (43) are rotatably supported on the first input shaft (21) while being restricted not to move relative to the first input shaft in the axial direction towards the prime mover (E/G).

4. The dual clutch transmission according to claim 3 further comprising:
at least one restriction member (81, 82) provided on the first input shaft for restricting the clutch frame (43) from moving towards the prime mover (E/G).

## Patentansprüche

1. Doppelkupplungsgetriebe, enthaltend:
eine erste Eingangswelle (21), die drehbar durch ein Gehäuse (10) gestützt ist, wobei die erste Eingangswelle (21) einen Hohlraum enthält;
eine zweite Eingangswelle (22), die die erste Eingangswelle (21) auf einer gemeinsamen Achse mit der ersten Eingangswelle (21) durchdringt, dass sie durch das Gehäuse zu stützen ist;
eine Doppelkupplung (40), die selektiv eine Rotationsantriebskraft einer Antriebsquelle (E/G) an die erste Eingangswelle (21) oder die zweite Eingangswelle (22) überträgt, wobei die Doppelkupplung (40) enthält:
einen Kupplungsrahmen (43), der eine erste Wand (43a) und eine zweite Wand (43b) enthält, die drehbar auf der ersten Eingangswelle (21) gestützt sind und miteinander verbunden sind, wobei sie einen Abstand zueinander in einer Axialrichtung der ersten Eingangswelle (21) halten, wobei der Kupplungsrahmen (43) daran gehindert ist, sich in Richtung der Antriebsquelle zu bewegen;
eine erste Kupplungsscheibe (44), die zwischen der ersten Wand (43a) und der zweiten Wand (43b) vorgesehen ist, dass sie in der Axialrichtung bewegbar ist;
eine erste Druckplatte (45), die zwischen der ersten Kupplungsscheibe (44) und der zweiten Wand (43b) vorgesehen ist, dass sie in der Axialrichtung bewegbar ist;
einen ersten Betriebsmechanismus (46), der die erste Druckplatte (45) in Richtung der ersten Wand (43a) bewegt;
eine zweite Kupplungsscheibe (47), die näher an der Antriebsquelle relativ zu der zweiten Wand (43b) positioniert ist, dass sie in der Axialrichtung bewegbar ist;
eine zweite Druckplatte (48), die zwischen der zweiten Kupplungsscheibe (47) und der Antriebsquelle vorgesehen ist, dass sie in der Axialrichtung bewegbar ist; und
einen zweiten Betriebsmechanismus (49), der die zweite Druckplatte (48) in Richtung der zweiten Wand (43b) bewegt.

2. Doppelkupplungsgetriebe nach Anspruch 1, wobei der Kupplungsrahmen (43) mit der Antriebsquelle (E/G) über einen Oszillationsabsorptionsmechanismus (75) verbunden ist.

3. Doppelkupplungsgetriebe nach einem der Ansprüche 1 oder 2, wobei die erste Wand (43a) und die zweite Wand (43b) des Kupplungsrahmens (43) drehbar auf der ersten Eingangswelle (21) gelagert sind, wobei sie daran gehindert sind, sich nicht relativ zur ersten Eingangswelle in der Axialrichtung in Richtung der Antriebsquelle (E/G) zu bewegen.

4. Doppelkupplungsgetriebe nach Anspruch 3, weiter enthaltend:
zumindest ein Begrenzungselement (81, 82), das auf der ersten Eingangswelle vorgesehen ist zum Begrenzen des Kupplungsrahmens (43) an der Bewegung in Richtung der Antriebsquelle (E/G).

## Revendications

1. Transmission à double embrayage, comprenant :
un premier arbre (21) d'entrée supporté en rotation par un boîtier (10), le premier arbre (21) d'entrée comprenant un creux ;
un deuxième arbre (22) d'entrée pénétrant à travers le premier arbre (21) d'entrée sur un axe commun avec le premier arbre (21) d'entrée pour être supporté par le boîtier;
un double embrayage (40) transmettant de manière sélective une force d'entraînement rotative d'un premier mécanisme (E/G) au premier arbre (21) d'entrée ou au second arbre (22) d'entrée, le double embrayage (40) comprenant:
une coque d'embrayage (43) comprenant une première paroi (43a) et une seconde paroi (43b) qui sont supportées de manière rotative sur le premier arbre (21) d'entrée et qui sont reliées l'une à l'autre tout en gardant une distance entre elles le long d'une direction axiale du premier arbre (21) d'entrée, la coque d'embrayage (43) étant restreinte à se déplacer vers le premier mécanisme;
un premier disque d'embrayage (44) agencé entre la première paroi (43a) et la seconde paroi (43b) pour être mobile dans la direction axiale;
une première plaque (45) de pression agencée entre le premier disque d' embrayage (44) et la seconde paroi (43b) pour être mobile dans la direction axiale;
un premier mécanisme (46) opérationnel déplaçant la première plaque (45) de pression vers la première paroi (43a) ;
un second disque d' embrayage (47) positionné plus près du premier mécanisme par rapport à la seconde paroi (43b) pour être mobile dans la direction axiale;
une seconde plaque (48) de pression agencée entre le second disque d'embrayage (47) et le premier mécanisme pour être mobile dans la direction axiale ; et
un second mécanisme (49) opérationnel déplaçant la seconde plaque (48) de pression vers la seconde paroi (43b).

2. Transmission à double embrayage selon la revendication 1, dans laquelle la coque d'embrayage (43) est reliée au premier mécanisme (E/G) par l'intermédiaire d'un mécanisme (75) d'absorption d'oscillation.

3. Transmission à double embrayage selon l'une ou l'autre des revendications 1 ou 2, dans laquelle la première paroi (43a) et la seconde paroi (43b) de la coque d'embrayage (43) sont supportées en rotation sur le premier arbre (21) d'entrée tout en étant restreint de ne pas se déplacer par rapport au premier arbre d'entrée dans la direction axiale vers le premier mécanisme (E/G).

4. Transmission à double embrayage selon la revendication 3, comprenant en outre:
au moins un organe restrictif (81,82) agencé sur le premier arbre d'entrée pour restreindre la coque d'embrayage (43) de se déplacer vers le premier mécanisme (E/G).
